# EUROPEAN PATENT APPLICATION

(11) **EP 3 015 903 A1**
(43) Date of publication of application: **04.05.2016**
(21) Application number: 14817400.6
(22) Date of filing: 19.06.2014
(51) Int. Cl.: G02B 27/01, B60K 35/00

(54) **HEAD-UP DISPLAY DEVICE**

(30) Priority: 24.06.2013 JP 2013131640
(71) Applicant: Nippon Seiki Co., Ltd., Nagaoka-shi, Niigata 940-8580 (JP)
(72) Inventor: KAWAGUCHI,Tsuyoshi, Nagaoka Niigata (JP)
(74) Representative: Carpmaels & Ransford LLP
(86) International application number: PCT/JP2014/066256
(87) International publication number: WO 2014/208438

(57) **Abstract**

Provided is a head-up display device that can be aesthetically pleasing, thereby improving marketability A HUD device (1) is provided with: a display device (20) that outputs display light (L) that represents a display image; a combiner (50) that has a concave surface (50a) to which the display light (L) output by the display device (20) falls incident, said combiner (50) concentrating the incident display light (L) so as to allow an observer (2) to see the display image from the concave surface (50a) side superimposed on a background in front; and an optical sensor (31) that is positioned so as to face the concave surface (50a) and detects the brightness of external light (N1) that passes through the combiner (50) and falls incident thereon.

## Description

### TECHNICAL FIELD

The present invention relates to a head-up display device.

### BACKGROUND ART

As a head-up display (HUD) device, for example, one disclosed in Patent Literature 1 has been known. This HUD device comprises a display unit for displaying an image, and a combiner capable of transmitting a scene (background) in front of a vehicle as well as enlarging the image. The HUD device is configured to enable a user, mainly a driver, to recognize display information such as a vehicle speed and mileage overlapped with a front scene. Further, the HUD device comprises an optical sensor for detecting the brightness of background for adjusting the display brightness of the display unit in accordance with surrounding brightness.

### CITATION LIST

### PATENT LITERATURE

Patent Literature 1: Japanese Unexamined Patent Application Publication No. 9-54276

### SUMMARY OF THE INVENTION

### PROBLEMS TO BE SOLVED BY THE INVENTION

In the HUD device according to Patent Literature 1, as shown in Figs. 1 and 4 of the Literature, when an optical sensor 9 is disposed in a unit case 1 (case body) or a combiner 2, the optical sensor is exposed or an aperture part for entering external light into the case body or the combiner becomes conspicuous, and the aesthetic appearance of the HUD device is spoiled. From this point of view, there has been room for still improvements in the merchantability.

The present invention has been made in view of the above circumstances. It is an object of the invention to provide a head-up display device capable of improving the merchantability while keeping the aesthetic appearance.

### SOLUTION TO PROBLEM

To achieve the above object, a head-up display device according to the present invention comprises a display unit that emits display light representing a display image; a combiner that has a concave surface to enter the display light emitted from the display unit, condenses the incident display light, and allows an observer to recognize the display image overlapped with a front background scene from the concave surface side; and a photodetector that is disposed to be opposite to the concave surface, and detects the brightness of external light entered through the combiner.

### EFFECT OF THE INVENTION

According to the present invention, it is possible to provide a head-up display device that is configured to be capable of improving the merchantability while keeping the aesthetic appearance.

### BRIEF DESCRIPTION OF THE DRAWINGS

Fig. 1 is a plan view of a HUD device according to an embodiment of the present invention.
Fig. 2 is a perspective view of the HUD device taken along the arrow A shown in Fig. 1.
Fig. 3 is a schematic sectional view of the HUD device taken along the B-B line shown in Fig. 1.
Fig. 4 is a schematic sectional view of a HUD device according to a modification of the present invention.

### MODE FOR CARRYING OUT THE INVENTION

Hereinafter, a HUD device according to an embodiment of the present invention will be described with reference to the drawings.

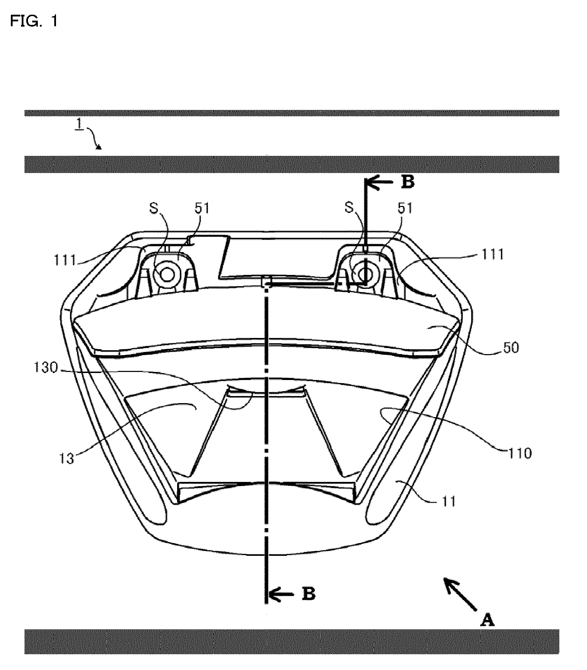

The HUD device 1 comprises, as shown in Figs. 1 to 3, a case body 10, a display unit 20, a circuit board 30, a reflection part 40, and a combiner 50.

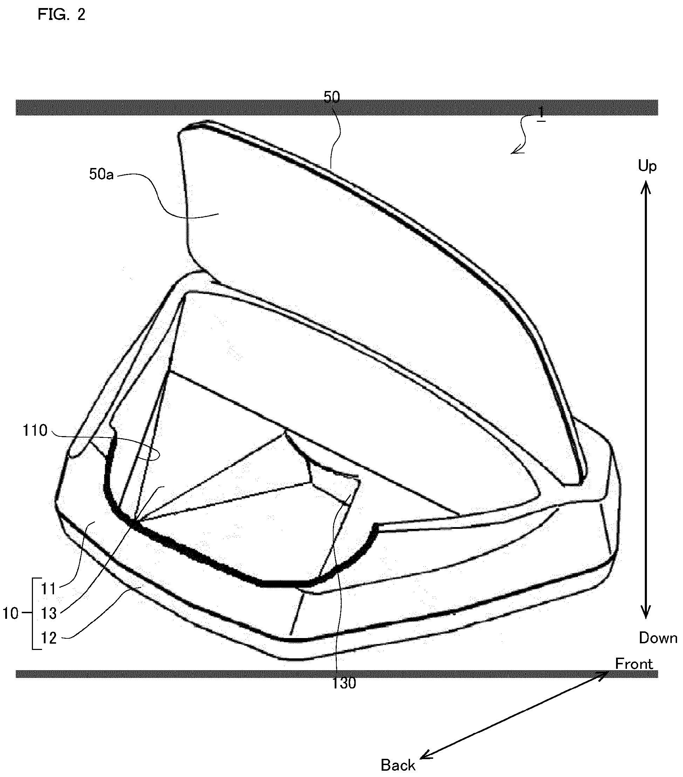

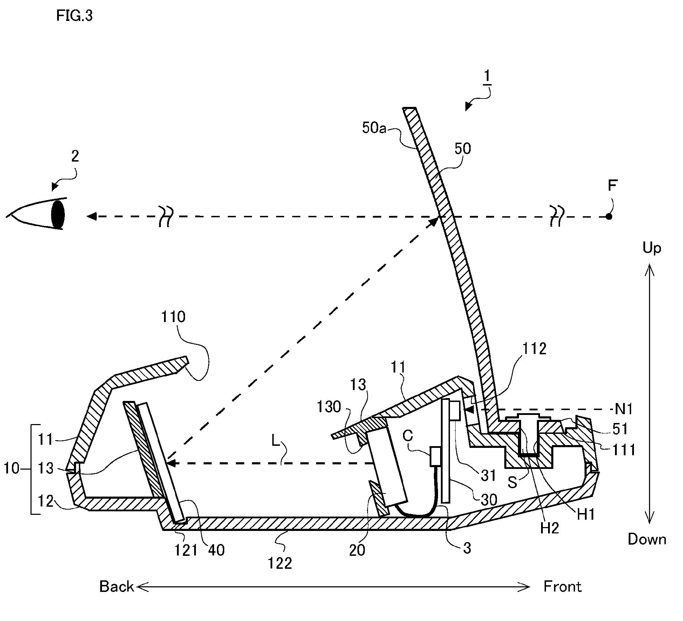

The HUD device 1 is configured, for example, as a stationary HUD device that is mounted on a dashboard of a vehicle (above an instrument panel, for example). In the following description, parts constituting the HUD device will be appropriately explained by assuming the upward direction as "up", the downward direction as "down", the forward direction as "front", and the backward direction as "back", respectively, when viewed from an observer 2 who recognizes a display image displayed by the HUD device 1 (see the double-headed arrows in Figs. 2 and 3).

The case body 10 comprises an upper case 11, a lower case 12, and a middle case 13. The upper case 11 is formed with an opening 110. The upper case 11 is connected to the lower case 12, thereby forming a boxlike shape with the upper side opened. In the boxlike shape, the display unit 20, the circuit board 30, and the middle case 13 are housed.

The upper case 11 has a flat mounting part 111 that is a part for mounting the combiner 50. The mounting part 111 is located in the end portion of the front side of the upper case 11 (the right end portion in Fig. 3). The mounting part 111 is formed with a screw hole H1 corresponding to a screw S for fixing the combiner 50 to the upper case 11. The combiner 50 being mounted on the mounting part 111 is shaped to extend upward from the upper case 11.

Further, the upper case 11 is formed with an aperture part 112 for exposing forward an optical sensor 31 mounted on the circuit board 30.

The middle case 13 is placed on the lower case 12. The lower case 12 is formed with a concave portion 121 that is shaped corresponding to the lower end portion of the reflection part 40. The reflection part 40 is held by the concave portion 121 and a part (rear side inner surface) of the middle case 13 (for example, one end of the reflection part 40 is inserted into the concave portion 121, and the rear side surface is fixed to the middle case 13 by an adhesive tape or the like).

The middle case 13 is a substantially cylindrical member. On a part of the outside surface (the right side in Fig. 3), the display unit 20 is disposed. The middle case 13 is formed with an exit port 130 that is an opening for exposing the display surface of the display unit 20. The middle case 13 may be provided with a transparent window member for covering the exit port 130.

The display unit 20 emits display light L representing a display image for informing display information such as a vehicle speed and mileage. The display unit is, for example, configured with a transmissive liquid crystal display comprising a liquid crystal panel and a backlight light source, or a self-luminous display.

The circuit board 30 is a printed circuit board, which is formed by mounting a control unit (not shown) comprising a microcomputer including a CPU (Central Processing Unit) and a storage unit such as a ROM (Read Only Memory), a graphic display controller (GDC) or the like, on a plate-shaped base material made of resin or the like including a glass fiber. The circuit board 30 is, for example, fixed to the lower case 12 by a not-shown mounting member, and is located in front of the display unit 20 and between the upper case 11 and the lower case 12. Further, the circuit board 30 is arranged to be substantially perpendicular to a bottom surface 122 of the lower case 12, namely the longitudinal direction. The circuit board 30 and the display unit 20 are conductively connected through an FPC (Flexible Printed Circuit) 3. An end of the FPC 3 is connected to the circuit board 30 through a connector C. The control unit obtains status information about a vehicle transmitted from an external unit (not shown) such as a vehicle ECU (Electronic Control Unit) through a communication line, and drives the display unit 20 according to the obtained information (that is, displays a predetermined display image on the display unit 20).

Further, the circuit board 30 is provided with an optical sensor (photodetector) 31, an amplifier circuit (not shown), a drive circuit for driving the display unit 20 (not shown), and the likes.

The optical sensor 31 is for detecting the brightness of incident light. The optical sensor is opposite to a lower end portion of a concave surface 50a of the combiner 50 described later, and is arranged so that the optical axis of light incident on the optical sensor 31 goes along the longitudinal direction (refer to Fig. 3). The optical sensor 31 supplies the amplifier circuit with a detection signal representing the brightness of incident light. The amplifier circuit amplifies the detection signal detected by the optical sensor 31, and supplies the signal to the control unit. The control unit adjusts the brightness of the display image to be displayed on the display unit 20 based on the obtained detection signal through the drive circuit. For example, when a value representing the brightness received by the optical sensor 31 is greater than a preset threshold value, the background is assumed bright. Thus, the control unit increases the display brightness of the display unit 20 by a predetermined degree to maintain the visibility of the display image. Specifically, when the display unit 20 comprises a transmissive liquid crystal display, for example, the control unit increases the brightness of the backlight light source.

The reflection part 40 is located on the display side of the display unit 20, namely the exit side of the display light L, and reflects the incident display light L toward the combiner 50. The reflection part 40 is made of an aluminum deposited resin molding, for example, and has a reflection surface configured as a curved surface for efficiently reflecting the display light L from the display unit 20 on the combiner 50 (in Fig. 3, the reflection surface is schematically expressed as a plane). Further, the reflection part 40 is held by the concave portion 121 and a part of the middle case 13 as described before, whereby the reflection surface is arranged to be substantially opposite to the display surface of the display unit 20. The display light L emitted from the display unit 20 passes through the exit port 130 and reaches the reflection part 40. And, the display light L reflected by the reflection part 40 passes through the opening 110 of the upper case 11 and goes to the combiner 50.

The combiner 50 comprises a plate-shaped half mirror having a curved surface, a hologram element, and the likes. The combiner 50 has a projecting portion 51 that projects from one end (a lower side end) to the direction other than the in-plane direction of the main surface of the combiner 50 (surface substantially opposite to the reflective surface of the reflection part 40).

The projecting portion 51 according to the embodiment projects, as shown in Fig. 3, in almost out-of-plane direction of the main surface of the combiner 50. Specifically, the projecting portion 51 projects toward the front of the observer 2 (opposite side of the observer 2 with respect to the combiner 50). There are two projecting portions 51, as shown in Fig. 1, each of which is formed with a hole H2 for inserting the screw S for fixing the combiner 50 to the case body 10 (the upper case 11). The screw S inserted into the hole H2 of the projecting portion 51 is screwed into the screw hole H1 of the upper case 11 from the upper side, whereby the combiner 50 is mounted to the mounting part 111. In other words, the projecting portion 51 is mounted to the mounting part 111 of the upper case 11 from the direction (upper side) orthogonal to its projecting direction (forward), whereby the combiner 50 is mounted to the mounting part 111.

In the combiner 50 being mounted and fixed to the upper case 11 as described above, the portion of the concave surface 50a above the upper case 11 becomes substantially opposite to the reflection part 40. The combiner 50, as shown in Fig. 3, changes the optical path of the incident display light L after being reflected by the reflection part 40 (changes the optical path of the display light L by reflection when a half mirror is used as the combiner 50, and changes the optical path of the display light L by diffraction when a hologram element is used). The concave surface 50a of the combiner 50 has a function of condensing the display light L, and is configured as a curved surface capable of forming a virtual image farther forward (for example, about 1m ahead of the combiner 50) than when simply reflecting light. The combiner 50 can transmit light from the front as well as forming a virtual image of the display image at a front position F, and thereby, the HUD device 1 enables the observer 2 to recognize both the virtual image and the outside scene or the like actually present in front.

Further, in the combiner 50 being fixed to the upper case 11, a portion overlapping with the upper case 11 in the vertical direction (lower end portion) covers the aperture part 112 formed in front of the optical sensor 31 of the upper case 11, and a lower side portion of the concave surface 50a overlapping with the upper case 11 in the vertical direction is opposed to the optical sensor 31 being exposed forward from the aperture part 112.

As a result, when the HUD device 1 is viewed from the front, the optical sensor 31 and the aperture part 112 become less conspicuous at a glance, and it is possible to maintain the aesthetic appearance of the HUD device 1.

Here, as shown in Fig. 3, external light N1 from the front of the combiner 50 transmits through the lower end portion of the combiner 50, passes through the aperture part 112 of the upper case 11, and enters the optical sensor 31 being opposite to the concave surface 50a. The optical sensor 31 detects the brightness of the external light N1. In accordance with this, as described before, the control unit appropriately adjusts the brightness of the display unit 20 based on the detection result.

Particularly, in this embodiment, as the optical sensor 31 is housed in the case body 10 and external light is incident from the aperture part 112 in front of the optical sensor 31, it is possible to sense the external light N1 mainly from the front. Further, it is possible to accurately sense the brightness of the external light N1 from the front by arranging the optical sensor 31 in the case body 10 close to the front, the projecting direction of the display image, not through a separate member such as a light guide. As the front of the combiner 50 is in the background direction when the observer 2 recognizes the display image, it is possible to adjust the brightness of a projection image more appropriately by sensing the brightness of the external light N1 that can almost be regarded as the brightness of the background. For example, even when a cabin is dark in the vicinity of a tunnel in the daytime and a projecting direction of the display image (i.e., a front, and also a background direction) is bright, it is possible to adjust the brightness of a projection image to appropriate brightness in accordance with the brightness of the projecting direction before a vehicle exits a tunnel.

Further, by arranging the optical sensor 31 as described above and arranging the circuit board 30 to be substantially perpendicular to the bottom surface 122 of the lower case 12, a separate member such as a light guide is unnecessary, the optical sensor 31 and the circuit board 30 are arranged in a space between the display unit 20 and the combiner 50, and the circuit board 30 does not extend forward from the combiner 50. Thus, compared with the case where the external light N1 enters the optical sensor 31 in the case body 10 through a separate member such as a light guide, it is possible to reduce the space in front of the display unit 20 in the case body 10, and reduce the size of the HUD device 1.

The HUD device 1 configured as described above comprises the display unit 20 that emits the display light L representing a display image; the combiner 50 that has the concave surface 50a to enter the display light L emitted from the display unit 20, condenses the incident display light L, and allows the observer 2 to recognize the display image overlapped with a front background scene from the concave surface 50a; and the optical sensor 31 that is arranged to be opposite to the concave surface 50a, and detects the brightness of the external light N1 entered through the combiner 50.

As a result, when the HUD device 1 is viewed from the front, the optical sensor 31 becomes less conspicuous at a glance, and it is possible to maintain the aesthetic appearance and improve the merchantability. Further, compared with the case where the external light N1 enters the optical sensor 31 through a separate member such as a light guide, it is possible to accurately sense the brightness of a projecting direction of the display image as well as reducing the number of parts.

Further, the HUD device 1 comprises the case body 10, which houses the display unit 20 and the optical sensor 31, and is formed with the aperture part 112 in front of the optical sensor 31. The combiner 50 is arranged to cover the aperture part 112 when viewed from the front.

Therefore, when the HUD device 1 is viewed from the front, the optical sensor 31 and the aperture part 112 become less conspicuous at a glance, and it is possible to maintain the aesthetic appearance and improve the merchantability.

Further, the HUD device 1 comprises the circuit board 30 for mounting the optical sensor 31. The circuit board 30 is arranged to be substantially perpendicular to the bottom surface 122 of the case body 10 (the lower case 12).

Therefore, it is possible to reduce the space in front of the display unit 20 in the case body 10, and reduce the size of the HUD device 1.

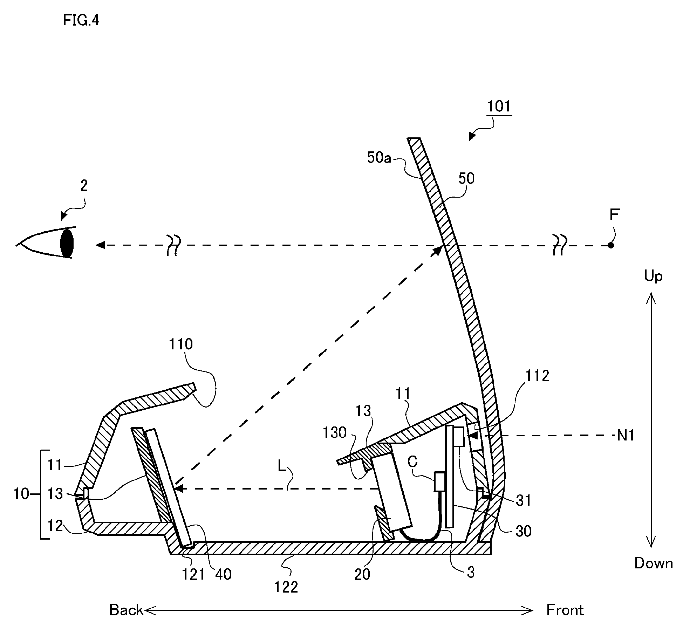

Next, a HUD device according to a modification will be described with reference to Fig. 4. The same or corresponding parts described above are denoted by the same reference numerals and its details are omitted.

In a HUD device 101 according to a modification, as shown in Fig. 4, a combiner 50 is arranged to cover the front side of a case body 10 (an upper case 11 and a lower case 12). A lower end portion of the combiner 50 is fixed to a mounting part (not shown) provided in the lower case 12 by a screw.

Even in such a configuration, when the HUD device 101 is viewed from the front, an optical sensor 31 and an aperture part 112 become less conspicuous at a glance, and it is possible to maintain the aesthetic appearance and improve the merchantability. Further, the case body 10 has no parts projecting forward from the combiner 50. Thus, due to the combiner 50, the case body 10 becomes less conspicuous at a glance when the HUD device 101 is viewed from the front, and it is possible to further improve the aesthetic appearance and enhance the merchantability of the HUD device 101. Further, in the HUD device 101, the combiner 50 is mounted on the lower case 12 to eliminate a part of the case body 10 projecting forward from the combiner 50, and the size is further reduced from the HUD device 101.

The present invention is not limited by the embodiments and the drawings. It is a matter of course to make changes to the above embodiments and drawings (including deletion of the components).

In the above description, the display light L from the display unit 20 reflects on the reflection part 40, and reaches the combiner 50. The configuration is not limited to this. The HUD device may be configured such that the display unit directly emits the display light to the combiner. In this case, the display unit is provided to be substantially opposite to the combiner, and the reflection part 40 is unnecessary.

In the above description, an example of a vehicle to mount the HUD device 1 (or 101) is a motor car. The vehicle is not limited to this. The HUD device 1 (or 101) may be installed in the vicinity of a driver seat of other vehicles such as ships and airplanes. Further, the device is not limited to those installed in the vicinity of a driver seat of a vehicle. The device can be applied to tabletop interiors and the likes to be installed in a room.

Further, in the above description, the HUD device 1 (or 101) has been described as a stationary device. However, the HUD device 1 (or 101) may be configured to be integrated with a dashboard of a vehicle, for example.

In the above description, a description of unimportant well-known technical matters has been properly omitted to facilitate the understanding of the present invention.

### INDUSTRIAL APPLICABILITY

The present invention is suitable for a head-up display device.

### DESCRIPTION OF REFERENCE NUMERALS

- 1, 101: HUD device
- 2: Observer
- 10: Case body
- 11: Upper case
- 112: Aperture part
- 12: Lower case
- 122: Bottom surface
- 13: Middle case
- 130: Exit port
- 20: Display unit
- 30: Circuit board
- 31: Optical sensor
- 40: Reflection part
- 50: Combiner

## Claims

1. A head-up display device, comprising:
a display unit that emits display light representing a display image;
a combiner that has a concave surface to enter the display light emitted from the display unit, condenses the incident display light, and allows an observer to recognize the display image overlapped with a front background scene from the concave surface side; and
a photodetector that is disposed to be opposite to the concave surface, and detects the brightness of external light entered through the combiner.

2. The head-up display device according to claim 1, comprising a case body that houses the display unit and the photodetector, and is formed with an aperture part in front of the photodetector,
wherein the combiner is arranged to cover the aperture part when viewed from the front.

3. The head-up display device according to claim 2, wherein the combiner is arranged to cover a front side of the case body.

4. The head-up display device according to claim 2 or 3, comprising a circuit board to mount the photodetector,
wherein the circuit board is arranged to be substantially perpendicular to a bottom surface of the case body.
